**Europäisches Patentamt**

**European Patent Office**

**Office européen des brevets**

(19)

(11) Veröffentlichungsnummer: **0 097 803**
**B1**

(12) **EUROPÄISCHE PATENTSCHRIFT**

(45) Veröffentlichungstag der Patentschrift:
**12.10.88**

(21) Anmeldenummer: **83104734.5**

(22) Anmeldetag: **13.05.83**

(51) Int. Cl.⁴: **C 01 B 3/36, C 10 J 3/46**

(54) Verfahren zum Betreiben eines Reaktors zur Erzeugung von Synthesegas und Vorrichtung zur Durchführung des Verfahrens.

(30) Priorität: **25.06.82 DE 3223702**

(43) Veröffentlichungstag der Anmeldung:
**11.01.84 Patentblatt 84/2**

(45) Bekanntmachung des Hinweises auf die Patenterteilung:
**12.10.88 Patentblatt 88/41**

(84) Benannte Vertragsstaaten:
**BE FR GB IT NL**

(56) Entgegenhaltungen:
**DE-C-905 974**
**GB-A-821 209**
**GB-A-1 566 698**
**GB-A-2 044 795**
**US-A-3 193 378**

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Knop, Klaus, Dr.- Ing., Eckesdyck 11, D-4170 Geldern- Hartefeld (DE)**
Erfinder: **Heinrich, Peter, Dr.- Ing., Reinersstrasse 36, D-4200 Oberhausen 11 (DE)**

## Beschreibung

Die Erfindung betrifft ein Verfahren zur Erzeugung von Synthesegas, bei dem das in einem Reaktor durch Vergasung von C-haltigem Brennmaterial gewonnene Synthesegas einer Gasaufbereitung unterzogen, abgekühlt, einer Hochtemperatur-Konvertierung unterzogen und ein Teil des Gases als Kreislaufgas dem Reaktor wieder zusammen mit Verbrennungsluft zugeführt wird, und bei dem ein Teil der Abwärme der aus dem Reaktor austretenden Gase wiedergewonnen wird. Die Erfinder betrifft ferner einen Reaktor zur Durchführung des Verfahrens.

Bei dem Verfahren zur Herstellung von Gasen mit einem bestimmten CO-$H_2$-Verhältnis nach der DE-C-905 974 verläßt der größte Teil des Gases den Erzreduktionsschacht und wird zum Zwecke der teilweisen Befreiung von Wasserstoff gekühlt, getrocknet und dann wieder erhitzt. Dieses Gas gelangt sodann in einen Rekarburator, in den zur Vergasung Öl zugeführt wird. Das den Rekarburator verlassene Gas wird als Reduktionsgas in den Erzreduktionsschacht eingeführt.

Durch die DE-A-3 103 933 ist ein Verfahren zur katalytisch-hydrierenden Vergasung von Kohle mit Dampf- und Wasserstoff bei mittleren Temperaturen (7000° C) bekannt. Bei diesem Verfahren ist der Kohlevergasung in einem Reaktor eine Gasaufbereitung nachgeschaltet und ein Teil der Synthesegase, deren Hauptprodukt Methan ist, wird nach Abzweigung von Produktgasen dem Vergasungsreaktor wieder zugeführt. Die besondere Zusammensetzung der Gase macht es erforderlich, daß man bei dem Verfahren zur Erzielung eines wasserstoffreichen Gasgemisches, Methan in einem zweiten Kreislauf durch Zugabe von Dampf reformieren muß. Die nötige Wärme zum Reformieren liefert ein Hochtemperatur-Kernreaktor. Von dem Hochtemperatur-Kernreaktor werden ferner der in den Vergasungsreaktor zurückgeführte Teil des Synthesegasstromes und der Wasserdampfstrom auf die für die Kohlevergasung erforderliche Temperatur aufgeheizt.

Die Wiedergewinnung der Abwärme der Vergasungsprodukte wird bei dem bekannten Verfahren dadurch gelöst, daß die aus dem Reaktor austretenden Gase zwei nachgeschaltete Kühler aufheizen, in denen die Wärmeübertragung auf Wasser bzw. Wasserdampf erfolgt, die von außen als Kühlmittel .ugeführt werden. Der hierdurch erzeugte, hocherhitzte Wasserdampf wird dem Reaktor nach erneuter Aufheizung durch die Abwärme des Hochtemperatur-Reaktors zugeführt.

Der Erfindung liegt die Aufgabe zugrunde, ein Verfahren zur Erzeugung von Synthesegas anzugeben, das unter Verbesserung des Wirkungsgrades eine direkte Übertragung der Abwärme auf das in den Reaktor zurückgeführte Gas erlaubt.

Diese Aufgabe wird bei dem eingangs genannten Verfahren erfindungsgemäß dadurch gelöst, daß die Abwärme der Gase nach der Gasaufbereitung an das Kreislaufgas übertragen wird, und das Kreislaufgas anschließend dem Reaktor zugeführt wird.

Bei dem erfindungsgemäßen Verfahren wird zur Übertragung der Abwärme abgekühltes Kreislaufgas eingesetzt. Das Kreislaufgas nimmt in einem Wärmeaustauscher die Hochtemperaturenergie des Synthesegases auf und stellt sie dort zur Verfügung, wo sie beim Verfahren benötigt wird. Das ist in der Grundausführung des Verfahrens der Wiedereintritt in den Reaktor. In den Reaktor gelangt also heißes Gas, das nicht mehr durch Verbrennung von Kohlenstoff aufgeheizt werden muß. Entsprechend läßt sich der Einsatz von Kohle und Sauerstoff im Vergleich zu bekannten Verfahren erheblich verringern.

In weiterer Ausgestaltung des Verfahrens kann das Kreislaufgas vor dem Wiedereintritt in den Vergasungsreaktor in einem Reduktionsreaktor partiell oxidiert werden. In einem Reduktionsreaktor wird hocherhitztes Reduktionsgas benötigt, das durch das im Wärmeaustauscher aufgeheizte Kreislaufgas zur Verfügung gestellt wird. Neben den Ersparnissen beim Einsatz von Kohle und Sauerstoff benötigt man bei dieser Verfahrensführung keinen zusätzlichen Prozeßdampf, da dieser bei der Erzreduktion in ausreichender Menge in das Kreislaufgas eingebracht wird.

Bei dem Verfahren wird weiterhin vorteilhaft nicht umgesetzter Kohlenstoff in der Reaktorasche bzw. in der Flugasche dem Reaktor wieder zugeführt, sowie als Brennmaterial dem Reaktor Kohlenstaub, Schweröl, Erdgas oder beliebige Mischungen dieser Komponenten zugeführt.

Zur Durchführung des Verfahrens eignet sich ein Reaktor 9, der ein zum Reaktoraußenmantel 31 koaxiales Innenrohr 32 aufweist, in dessen oberes Ende Zuführungen 6, 8 ragen und das am unteren Ende einen zum Reaktormantel 31 gerichteten Rand 33 trägt, sowie einen im Abstand zum unteren Ende des Innenrohres 32 angeordneten Boden mit Asce-Austragsleitung 28 und einer Abgasleitung im oberen Reaktormantelbereich 34.

Die Vorrichtung zur Durchführung des erfindungsgemäßen Verfahrens ist vorteilhaft derart aufgebaut, daß zwischen Reaktor und Vorrichtungen zur Gasaufbereitung ein Abhitze-Wärmeaustauscher zur Aufheizung des Kreislaufgases nach der Gasaufbereitung angeordnet ist.

Weitere vorteilhafte Ausgestaltungen dieser Vorrichtung sind in den anderen Unteransprüchen beschrieben.

Im folgenden werden zwei Ausführungsbeispiele der Erfindung anhand von Schaltschemata nur beschrieben.

Es zeigen:

Figur 1 das Blockdiagramm einer Anlage zur Erzeugung von Frisch- oder Synthesegas und

Figur 2 das Blockdiagramm zur Erzeugung von Synthesegas zur Vervendung in einem Reduktions-Reaktor.

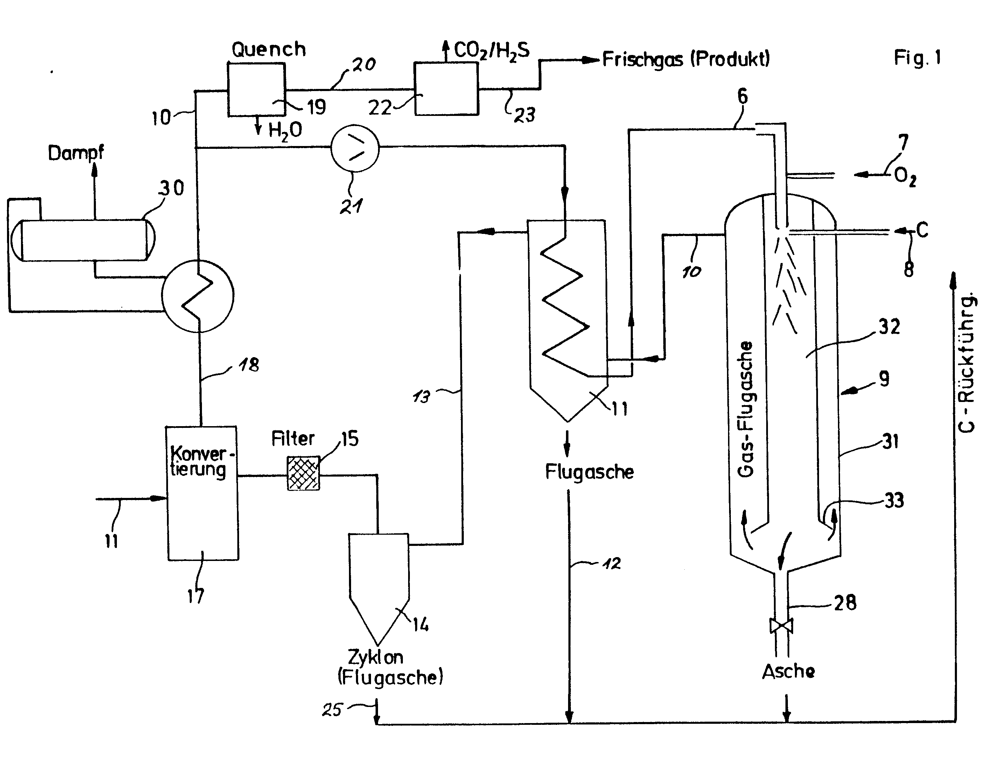

Gemäß Figur 1 wird eine Vergasungsreaktor Kohlenstoff in Form von Kohlenstaub zugeführt. Dieser Kohlenstoff kann aber auch in Form von Gas oder Öl zugeführt werden. Dem Reaktor 9 wird weiterhin Reaktionsgas zugeführt, welches einen Teilstrom des in dem Reaktor erzeugten Gases darstellt.

Unten aus dem Reaktor 9 wird bei Verwendung von Kohlenstaub als Kohlenstoffträger Asche 28 abgezogen und das erzeugte Gas verläßt den Reaktor mit hoher Temperatur. Das Reaktionsgas tritt dann in einen Wärmeaustauscher und Flugascheabscheider 11 ein, in welchem es abgekühlt wird. Nach Passieren eines Zyklons 14 oder eines anderen geeigneten Flugasche-Reinabscheiders wird das Reaktionsgas dann über einen Filter 15 einer Konvertierung 17 zugeführt, in welcher Wasser zugesetzt wird. Das Reaktionsgas durchläuft dann einen Wärmeaustauscher, welcher mit einem Dampferzeuger 30 gekoppelt ist und in welchem es von 400 auf 150° C heruntergekühlt wird. Ein Teilstrom des Reaktionsgases wird dann einem Kompressor 21 zugeführt und dann erneut dem Abhitze-Wärmetauscher 11 zugeführt, in welchem es aufgeheizt wird. Dieses aufgeheizte Gas wird dann dem Vergasungsreaktor 9 als Eingangsmedium wieder zugeführt, so daß für diesen Teilkreis der Kreislauf geschlossen ist.

Das nicht dem Reaktor 9 wieder zugeführte Gas wird über einen Quenchturm 19 und einer CO$_2$ und H$_2$S-Abscheidung 22 als Frischgas oder Synthesegas als erzeugtes Gas gewonnen.

Die Flugasche kann nach Ausfällen von Kohlenstoff als Abfall beseitigt werden, wobei der Kohlenstoff wieder dem Reaktor 9 zugeführt werden kann.

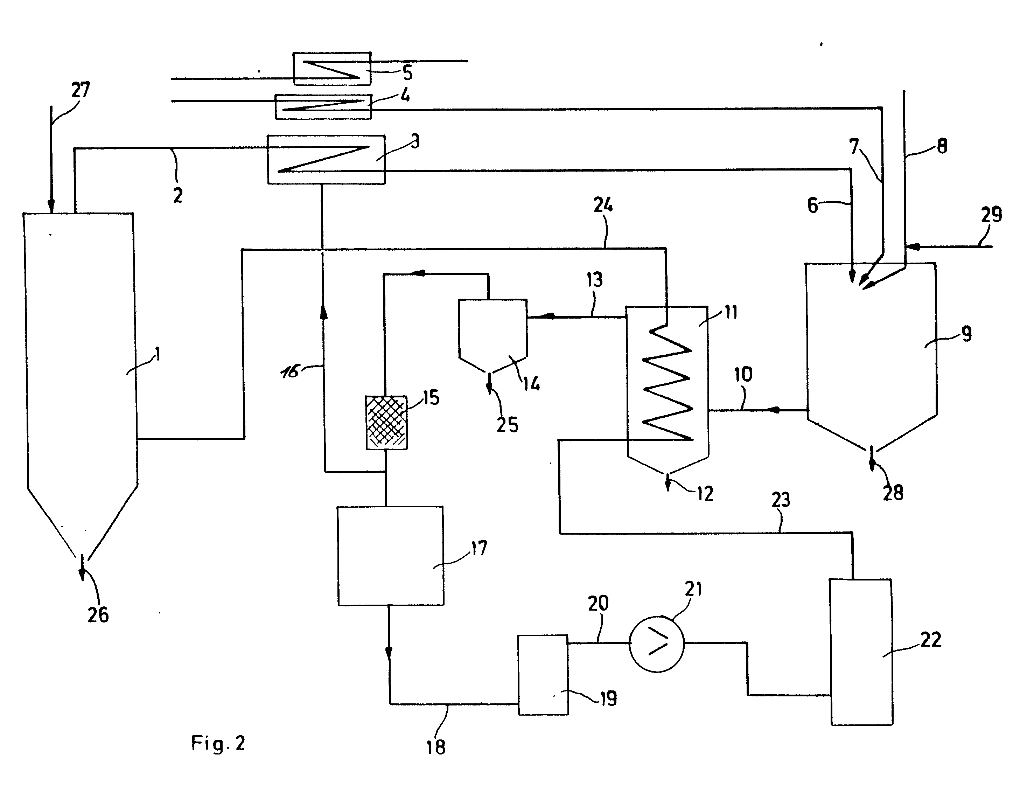

Gemäß Figur 2 kann das erfindungsgemäße Verfahren direkt zum Betreiben eines Reduktionsreaktors, z. B. für die Direktreduktion von Eisenerz zu Eisenschwamm benutzt werden. Der Gaserzeugungsreaktor wird in diesem Fall in gleicher Weise genutzt, wie dies gemäß Figur 1 beschrieben ist. Dem Reaktor 9 wird einmal über die Zuleitung 8 Kohlenstoff von Raumtemperatur und zum anderen über die Zuleitung 7 Sauerstoff zugeführt, während über die Leitung 6 das im Kreislauf geführte Reaktionsgas zugeführt wird. Das in dem Gaserzeugungsreaktor erzeugte Gas gelangt über die Leitung 10 in den Abhitzewärmetauscher 11, der das Gas abkühlt und der als Vorabscheider für die Flugasche dient. Nach Durchlaufen des Zyklonabscheiders 14 und des Filters 15 oder anderer geeigneter Vorrichtungsteile zur Entfernung von Feststoffen wird dann ein Teil des Gasstromes abgezweigt und dient als Oxydationsmittel in einem Erhitzer 3, welcher das aus dem eigentlichen Reduktionsreaktor 1 entströmende Gas auf die notwendige Temperatur von ca. 1100° C aufheizt.

Das nicht in dem Abgaserhitzer 3 verwendete Gas wird einem Hochtemperatur-Konverter 17 zugeführt, aus welchem es einem Quenchturm 19 und einem Verdichter 21 zugeführt wird. Der Verdichter 21 speist die CO$_2$/H$_2$S-Wäsche 22 und das Gas gelangt dann über die Leitung 23 wieder in den Abhitzewärmeaustauscher 11, in welchem es auf eine Temperatur von ca. 900° C aufgeheizt wird. Dieses Reaktionsgas wird dann einem Reduktionsreaktor 1 zugeführt, der weiterhin bei 27 mit Erz beschickt wird und dem bei 26 im Durchlaufverfahren das reduzierte Produkt entnommen wird. Das Gas verläßt den Reaktor 1 und wird nach der bereits genannten Aufheizung in dem Abgaserhitzer 3 dem Reaktor 9 wieder zugeführt. Für den Fachmann selbstverständlich kann dabei die hochgradige Abgas-Energie aus dem Abgas-Erhitzer 3 in einem Sauerstoff-Vorwärmer 4 und einem Dampferzeuger 5 genutzt werden. Die Wirkungsweise des Reaktors 9 wird dabei durch den erhitzten Sauerstoff verbessert.

Ersichtlicherweise sind in den beiden beschriebenen Kreisläufen keine Kühlungen vorhanden, ohne daß die gewonnene Energie nicht wieder in den Kreislauf zurückgespeist würde. Der Wirkungsgrad der beschriebenen Kreisläufe ist also optimal und durch die Verwendung von Kohle als Kohlenstoffträger kann das beschriebene Verfahren besonders günstig unter Bedingungen, eingesetzt werden, unter denen die Verwendung von Öl oder Erdgas nicht günstig erscheint. Das beschriebene Verfahren ist also in idealer Weise zur Lösung der anstehenden Probleme geeignet.

**Liste der Bezugszeichen**

1   Reaktor zur Reduktion von Erzen
2   Abgas aus Reaktor (T = 400 - 500° C)
3   Abgaserhitzer
4   Sauerstoffvorwärmer
5   Dampferzeuger (zur Verwendung in CO$_2$-Wäsche und Konvertierung)
6   Erhitztes Abgas (T = 1000 - 1100° C)
7   Vorerwärmter Sauerstoff (T = 400° C)
8   Kohlenstoff (Kohlenstaub; 0,5 mm Trockenmahlung)
9   Vergasungsreaktor
10  Gas aus Vergasungsreaktor (Rohgas)
11  Abhitzewärmetauscher
12  Flugstaub aus Vergasungsreaktor
13  Gas aus Abhitzekessel
14  Zyklonabscheider
15  Filter
16  Brenngas (für Abgaserhitzer 3)
17  Hochtemperaturkonvertierung
18  Gas nach Konvertierung
19  Quenchturm und Abscheidetrommel
20  Reingas
21  Kompressor

22 CO$_2$-Wäsche / H$_2$S-Wäsche
23 Reduktionsgas (kalt)
24 Reduktionsgas (heiß)
25 Flugstaub
26 Produkt aus Erzreduktion
27 Erzaufgabe
28 Asche aus Vergasungsreaktor
29 Erdgas (im Anfahrbetrieb)
30 Dampftrommel
31 Mantel des Vergasungsreaktors 9
32 Koaxiales Innenrohr (im Vergasungsreaktor 9)
33 zum Reaktormantel 31 gerichteter Rand des Innenrohres 32

**Patentansprüche**

1. Verfahren zur Erzeugung von Synthesegas, bei dem das in einem Reaktor durch Vergasung von C-haltigem Brennmaterial gewonnene Synthesegas einer Gasaufbereitung unterzogen, abgekühlt, einer Hochtemperatur-Konvertierung unterzogen und ein Teil des Gases als Kreislaufgas dem Reaktor wieder zusammen mit Verbrennungsluft zugeführt wird, und bei dem ein Teil der Abwärme der aus dem Reaktor austretenden Gase wiedergewonnen wird,
dadurch gekennzeichnet,
daß die Abwärme der Gase nach der Gasaufbereitung an das Kreislaufgas übertragen wird, und das Kreislaufgas anschließend dem Reaktor (9) zugeführt wird.

2. Verfahren nach Anspruch 1,
dadurch gekennzeichnet,
daß das Kreislaufgas vor dem Wiedereintritt in den Reaktor (9) teilweise oxidiert wird.

3. Verfahren nach Anspruch 2,
dadurch gekennzeichnet,
daß die partielle Oxidation des Reaktorabgases in einem Erzreduktionsreaktor (1) erfolgt.

4. Verfahren nach Anspruch 1 oder 2,
dadurch gekennzeichnet,
daß nicht umgesetzter Kohlenstoff in der Reaktorasche bzw. in der Flugasche dem Reaktor wieder zugeführt wird.

5. Verfahren nach Anspruch 1,
dadurch gekennzeichnet,
daß als Brennmaterial dem Reaktor Kohlenstaub, Schweröl, Erdgas oder beliebige Mischungen dieser Komponenten zugeführt werden.

6. Reaktor zur Durchführung des Verfahrens nach einem der vorhergehenden Ansprüche,
gekennzeichnet durch ein zum Reaktoraußenmantel (31) koaxiales Znnenrohr (32), in dessen oberes Ende Zuführungen (6, 8) ragen und das am unteren Ende einen zum Reaktormantel (31) gerichteten Rand (33) trägt, einen im Abstand zum unteren Ende des Znnenrohres (32) angeordneten Boden mit Asche-Austragsleitung (28) und eine Abgasleitung (34) im oberen Reaktormantelbereich.

**Claims**

1. Method of producing synthesis gas in which the synthesis gas produced in a reactor by gasification of carbon-containing combustible material, is subjected to a gas cleaning, cooled, subjected to a high temperature conversion and a proportion of the gas is fed to the reactor again together with combustion air as recycled gas, and in which a proportion of the waste heat of the gases leaving the reactor is reclaimed,
characterised in that,
the waste heat of the gases after the gas cleaning is transferred to the recycled gas and the recycled gas is subsequently fed to the reactor (9).

2. Method as claimed in claim 1,
characterized in that,
the recycled gas is partially oxidised before reentry into the reactor (9).

3. Method as claimed in claim 2,
characterised in that,
the partial oxidation of the reactor exhaust gas is effected in an ore reduction reactor (1).

4. Method as claimed in claim 1 or 2,
characterized in that,
unconverted carbon in the reactor ash or in the fly ash is fed back to the reactor.

5. Method as claimed in claim 1,
characterised in that,
coal dust, heavy oil, methane or any desired mixture of these components is fed to the reactor as the combustible material.

6. Reactor for carrying out the method as claimed in one of the preceding claims,
characterised by an inner tube (32) which is coaxial with the outer shell of the reactor (31) and into whose upper end inlets (6, 8) extend and which at its lower end carries an edge (33) directed towards the reactor shell (31), a floor arranged at a distance from the lower end of the inner tube (32) with an ash discharge line (28) and a waste gas line (34) in the upper region of the reactor shell.

**Revendications**

1. Procédé pour la production de gaz de synthèse, procédé dans lequel le gaz de synthèse obtenu par gazéification dans un réacteur d'un matériau combustible contenant du carbone, est soumis à un traitement, refroidi, soumis à une conversion à haute température et une partie de ce gaz est ramenée au réacteur en tant que gaz de recyclage avec de l'air comburant, une partie de la chaleur perdue par le gaz sortant du gaz étant récupérée, procédé caractérisé en ce que la chaleur perdue des gaz est transmise après le traitement des gaz au gaz de recyclage, et ce gaz de recyclage est ensuite amené au réacteur (9).

2. Procédé selon la revendication 1, caractérisé en ce que le gaz de recyclage est partiellement oxydé avant d'entrer à nouveau dans le réacteur (9).

3. Procédé selon la revendication 2, caractérisé en ce que l'oxydation partielle du gaz sortant du réacteur s'effectue dans un réacteur de réduction de minerai (1).

4. Procédé selon la revendication 1 ou 2, caractérisé en ce que le carbone non transformé est ramené dans la cendre du réacteur ou bien dans la cendre volante au réacteur.

5. Procédé selon la revendication 2, caractérisé en ce que, comme matériau combustible, on amène au réacteur de la poussière de charbon, de l'huile lourde, du gaz naturel, ou bien des mélanges quelconques de ces composants.

6. Réacteur pour la mise en oeuvre du procédé selon une des précédentes revendications, caractérisé en ce qu'il comporte un tube interne (32) co-axial à l'enveloppe extérieure (31) du réacteur, tube dans l'extrémité supérieure duquel pénètrent des alimentations (6, 8) et qui porte à son extrémité inférieure, un bord (33) dirigé vers l'enveloppe (31) du réacteur, un fond comportant une canalisation d'extraction des cendres (28) étant disposé à une certaine distance de l'extrémité inférieure du tube interne (32), et une canalisation d'échappement des gaz (34) étant prévue dans la zone superieure de l'enveloppe du réacteur.

Fig. 1

Fig. 2